# Europäisches Patentamt
# European Patent Office
# Office européen des brevets

(11) Publication number: **0 187 157**
**B1**

(12) **EUROPEAN PATENT SPECIFICATION**

(45) Date of publication of patent specification: **11.10.89**

(51) Int. Cl.⁴: **G 09 B 29/06**

(21) Application number: **85903031.4**

(22) Date of filing: **21.06.85**

(86) International application number:
**PCT/GB85/00275**

(87) International publication number:
**WO 86/00452 16.01.86 Gazette 86/02**

(54) **DISPLAY AND STORAGE DEVICE FOR MAPS IN SCROLL FORM.**

<table>
<tr><td>

(30) Priority: **21.06.84 GB 8415847**

(43) Date of publication of application:
**16.07.86 Bulletin 86/29**

(45) Publication of the grant of the patent:
**11.10.89 Bulletin 89/41**

(84) Designated Contracting States:
**AT BE CH DE FR IT LI LU NL SE**

(56) References cited:
**DE-C- 690 866**
**FR-A-1 442 446**
**FR-A-2 339 560**
**GB-A- 635 975**
**GB-A-1 584 083**

</td><td>

(73) Proprietor: **GAINSBOROUGH HOLDINGS LIMITED**
**25B, Thames House, 140, Battersea Park Road London SW11 4NB (GB)**

(72) Inventor: **RENNIE, John, Marshall**
**2, Greenacres Birdham**
**Chichester Sussex PO20 7HH (GB)**
Inventor: **LAURENSON, Joseph, J.**
**Unit 1 Fitzherbert Spur**
**Farlington, Portsmouth, PO6 1TT, Hants. (GB)**

(74) Representative: **Deans, Michael John Percy et al**
**Lloyd Wise, Tregear & CO. Norman House 105-109 Strand**
**London WC2R OAE (GB)**

</td></tr>
</table>

Courier Press, Leamington Spa, England.

## Description

This invention relates to maps, charts and the like written or printed matter of the kind which could conveniently be mounted on a roll for storage.

Naval charts, for example, are commonly provided in this form. For more general use, as for example in the case of maps for motorists, maps in this form are difficult to handle. Where a number of maps are required in order, for example, to cover a large area, such as the whole of Great Britain, there is a danger that maps or charts in store may become unwound.

Arrangements in which maps in scroll form are mounted within an apparatus of the kind in which two half-casings are biased to close towards each other to form a complete casing for the map, chart or the like have been previously proposed. For example, British Patent Specification 1584083 of Brant Waterhouse discloses a document holder, particularly suitable for maps, in which the document is wound in scroll form on a pair of rollers which are spring biased apart. The rollers are mounted in respective casing members. There is a suggestion, but no means described as to how it might be achieved, to the effect that the rollers may be removed from the casing members to allow the map to be changed.

In accordance with a first aspect of the present invention, we provide a replaceable cartridge for use in a map, chart or the like apparatus of the kind in which two half-casings biased to close towards each other to form a complete casing for a map, chart or the like in scroll form are openable against the said bias to reveal the map, chart or the like, the cartridge comprising: a pair of supports; and a flexible substrate, on which the map, chart or the like is depicted, wound thereon in scroll form; the said supports including locking means arranged to be automatically rendered inoperative by the act of mounting the cartridge in the casing, and adapted to prevent the scroll from inadvertently unwinding while outside the casing.

In one preferred arrangement, each said support comprises: a tubular member to which one end of the flexible substrate is attached and on which the substrate is wound; and an end member biased by means of a tension coil spring located within said tubular member into locking engagement therewith to prevent relative rotation between the end member and the tubular member, and including an integral cam follower adapted for camming engagement with a cam surface formed on an end cap of said casing to lift the said end member out of locking inter-engagement with said tubular member to free said tubular member for rotation relative thereto against the bias of said coil spring tending to close the two halves of the casing.

In a second and alternative aspect of this invention, we provide a map, chart or the like apparatus comprising two half-casings biased to close towards each other to form a complete casing for a map, chart or the like in scroll form, the two half-casings being openable against the said bias to reveal the map, chart or the like, each said half-casing having an end cap at one end openable to enable the insertion therewithin or removal therefrom of a replaceable map, chart or the like cartridge having a pair of supports, and a flexible substrate on which the map, chart or the like is depicted wound on the said supports in scroll form, the said supports including locking means adapted to prevent the scroll from unwinding, and the respective said half-casings being provided with disabling means adapted to disable said locking means so that when the said cartridge is mounted within the apparatus, the two half-casings are openable against the said bias to reveal the map, chart or the like on a selected portion of the said flexible substrate.

In one preferred arrangement, end caps at one end of the respective half-casings are suitably slidable in a groove and rail arrangement away from each other in a direction perpendicular to the length of the half-casings so as to open both half-casings at the same end to enable the cartridge to be inserted axially thereinto, end members last. When the opposite end of the cartridge is seated in the inner end of the casing, the end caps are slid back into position with camming engagement between the end cap cam surfaces and the cam follower.

Other arrangements are possible including another preferred arrangement in which the end cap is pivotally mounted on the casing so as to rotate rather than slide with camming engagement between its cam surface and the cam follower on the end member of the support.

The invention is hereinafter more particularly described by way of example only with reference to the accompanying drawings, in which:

Fig. 1 is an overall perspective view, partly broken away showing an embodiment of map, chart or the like apparatus incorporating an embodiment of replaceable cartridge in accordance with one aspect of the present invention;

Fig. 2 is a partial perspective view illustrating the insertion of a cartridge into the map casing of the embodiment of Fig. 1;

Fig. 3 is a partial sectional view to an enlarged scale of one end of one support of the cartridge of Figs. 1 and 2;

Fig. 4 is an end view of the tubular member of the support;

Fig. 5 is a side elevational view, as seen from the right in Fig. 3 showing the end member and spring of the support of Fig. 3; and

Figs. 6 to 12 show successive stages in the replacement of an existing cartridge by a different cartridge and the opening of the apparatus for reading of the map, all in connection with an alternative embodiment.

In the drawings, a map, chart or the like written or printed matter (generally designated 11), is depicted upon a flexible substrate in any conventional fashion. The substrate may be formed of any of the conventional media for this purpose, including paper, whether or not reinforced with a cloth backing, plastics, etc. The only essential requirement for the substrate is that it be sufficiently flexible to be repeatedly wound upon and unwound from a roll.

For convenience, in the description which follows, we shall refer to the substrate depicting a map, but it is to be understood that the invention is not so limited. The substrate may carry written or printed matter of any kind.

The map 11 is wound upon respective supports 12 in scroll form, the supports being mounted within respective half-casings 13 so as to be spring biased in the direction to wind the substrate thereon, the effect being that the two half-casings 13 are biased to close towards each other to form a complete casing for the scroll. A latch or other suitable locking means (not shown) may be provided for holding the two half-casings together in the closed condition.

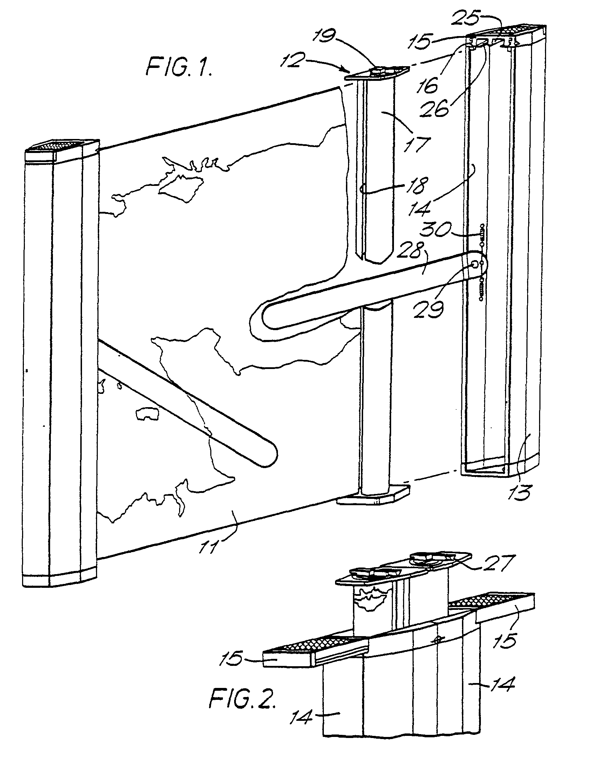

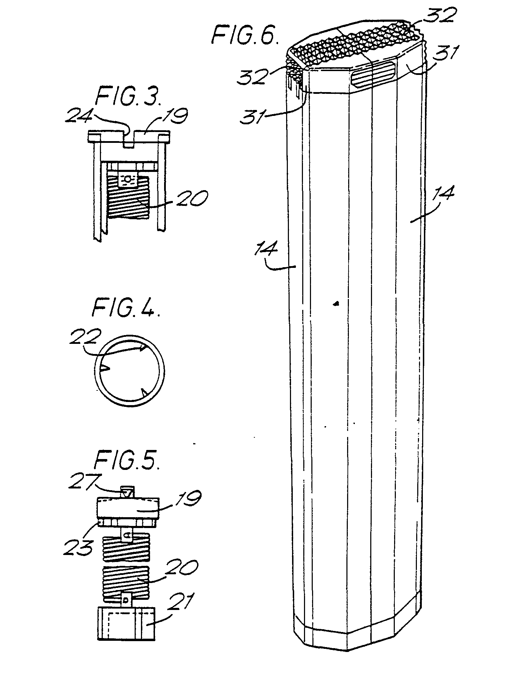

Referring now to Fig. 1, it will be seen that each half-casing comprises an elongate channel member 14 suitably U-shaped in cross section. In the illustrated embodiment the channel members 14 are provided with end caps 15, slidable by means of a groove-and-rail coupling connection 16 with the channel members 14, so as to open one end A of the closed casing as shown in Fig. 2 to allow a replaceable cartridge to be inserted axially thereinto.

Each support 12 comprises a tubular member 17 splined at 18 to receive one end of the map 1 for permanent fixture thereto, on which tubular member 17 the map is wound, and an end member 19. As can best be seen from Figs. 3 and 5, the end member is attached to one end of a tension coil spring 20, the other end of which is fixedly secured to a locating member 21 the configuration of which is chosen to form a force fit within the interior of the tubular member 17. The locating member 21, once fixed in position, must be incapable of rotation within the tubular member 17. The coil spring 20 is arranged to be under tension so as to tend to bias the end member 19 against the end of the tubular member 17 and into locking engagement with a dog-tooth ratchet arrangement 22, best shown in Fig. 4, in the interior of the tubular member. The end member 19 is formed with indentations 23 for receiving the ratchet dog teeth 22. It will be appreciated that in addition to biasing the end member 19 axially against the end of the tubular member, the spring 20 will also bias the tubular member for rotation relative to the end member 19, though, of course, in the condition of Fig. 3, such rotation is prevented. By virtue of this arrangement, the cartridge such as shown in Fig. 2, when outside the casing is such that the scroll map cannot be inadvertently unwound.

The cartridge consisting of the supports 12 and the map 11 wound thereon is inserted axially into the casing, end members 19 last, when the end caps 15 have been slid apart. When the opposite end of the cartridge is seated in the inner end of the casing, the end caps 15 are slid back into position as shown in Fig. 1.

As will be seen from Figs. 1 and 3, the end member 19 has a slot 24 along which a depending projection 25 on the inner surface of end cap 15 slides as the end cap 15 is slid back into position along the groove-and-rail arrangement 16. The inner undersurface of the end cap 15 is further provided with cam surfaces 26 which engage with integral cam followers 27 formed on the end members 19. The effect is to lift the end member 19 axially relative to the tubular member 17 as a result of the camming action between the surface 26 and the follower 27 so as to disengage the ratchet dog teeth 22 from the indentations 23.

By this action the tubular member is freed for rotation relative to the end member 19. In this condition, the end member 19 is keyed to the end cap 15 by means of the slot 24 and projection 25 and so cannot itself rotate relative to the casing. The effect, therefore, is to enable the tubular member 17 to rotate within its half casing 13 and against the bias of the spring 20 to allow the map to be unwound. Because of the bias, the two casing halves tend to close winding the map back onto its supports.

As shown in Fig. 1, each half casing 13 mounts a spacer 28, suitably a magnifying cursor, pivoted at 29 and self-centred by means of opposed springs 30. The self centering arrangement ensures that as the two casing halves are pulled apart against the bias of the springs 20, the spacers 28 spring out into position and can be used to prop the two casing halves 13 apart. By providing the spacers 28 as magnifying cursors, while one is used to prop the two casing halves apart, the other can be used to magnify a selected portion of the visible part of the map. As an aid to visibility, the apparatus may further include illumination, suitably by means of an "edge effect" along the cursor itself. A so-called "beta" light source may be used so avoiding the need for incorporation of a battery in the apparatus.

Persons skilled in this art will readily appreciate that other arrangements are possible within the broad scope of the invention. Thus, although we have referred to the surfaces 26 on the interior of the end caps 15 as constituting cam surfaces, and to the element 27 integrally formed with the end members 19 as being cam followers, the element 27 could alternatively be seen as a cam, the surface 26 serving as its follower. We have found the cooperation between a cam and its follower in closing the casing after a cartridge has been inserted thereinto to be easily the simplest and most effective and reliable means by which automatically to disable the locking means which is adapted when the cartridge is outside the casing to prevent the cartridge from inadvertently unwinding. However, other means are possible within the broad scope of this invention. For example, the two halves of the cartridge could be held together by a spring biased latch which is automatically lifted by a sliding casing end member.

We refer now to Figs. 6 to 12 which illustrate a further, and presently most preferred embodiment of map, chart or the like apparatus in accordance with the present invention.

Broadly speaking, it will be seen that the apparatus of Figs. 6 to 12 is essentially a modification of the arrangement of Figs. 1 to 5. Where appropriate, like reference numerals are employed in Figs. 6 to 12 for the corresponding parts in Figs. 1 to 5. However, instead of having end caps 15 which are slidable as a whole to open the ends of the channel members 14, thereby to cause the cartridge locking means to operate and simultaneously allowing the cartridge to be withdrawn through the open end of the casing, the arrangement of Figs. 6 to 12 has casing end members 31 pivotally mounted on the ends of the channel members 14 and slide members 32 slidable in a groove-and-rail arrangement 33 in the end members 31.

Starting from the completely closed casing in Fig. 6, Figs. 6 to 12 show successive stages in the opening of the casing end to allow removal of an existing cartridge and its replacement by a different cartridge and then opening of the casing to allow the map to be read.

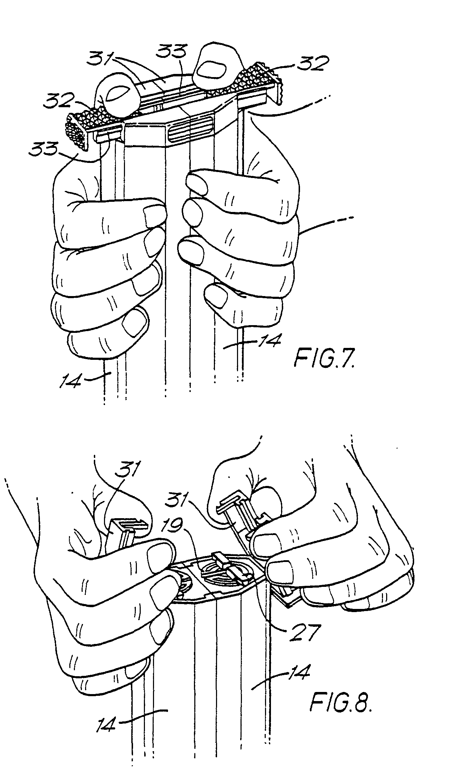

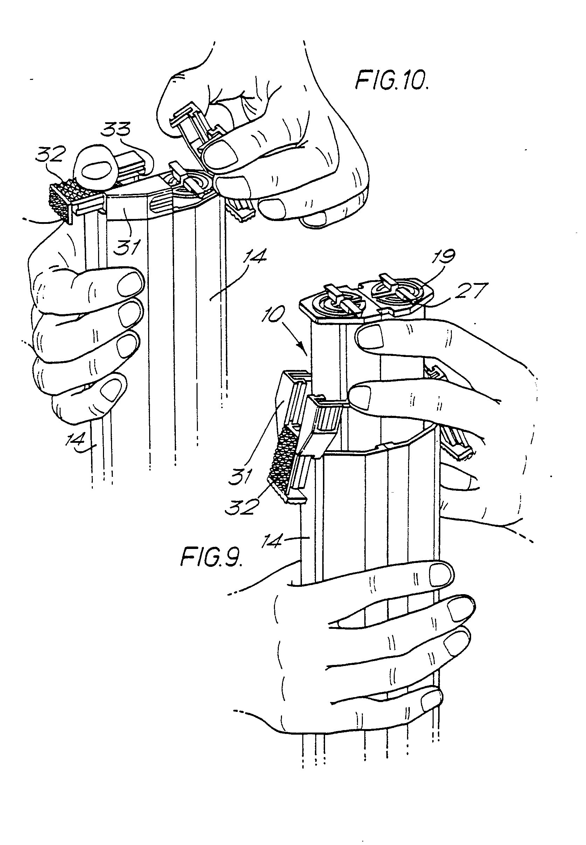

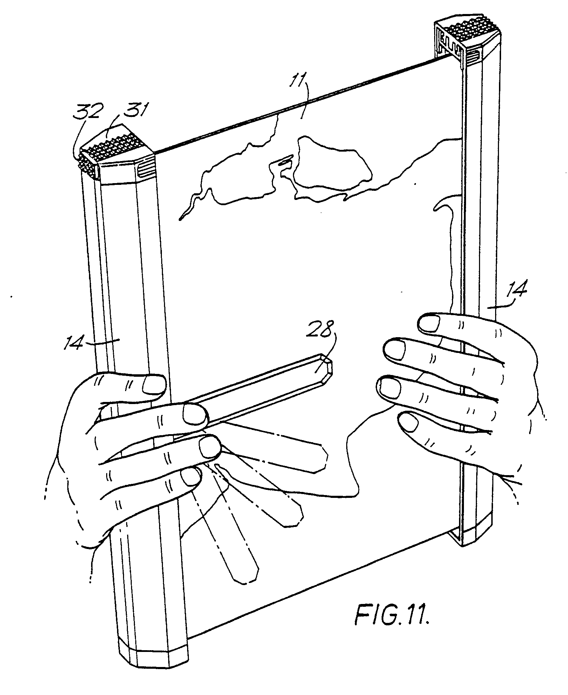

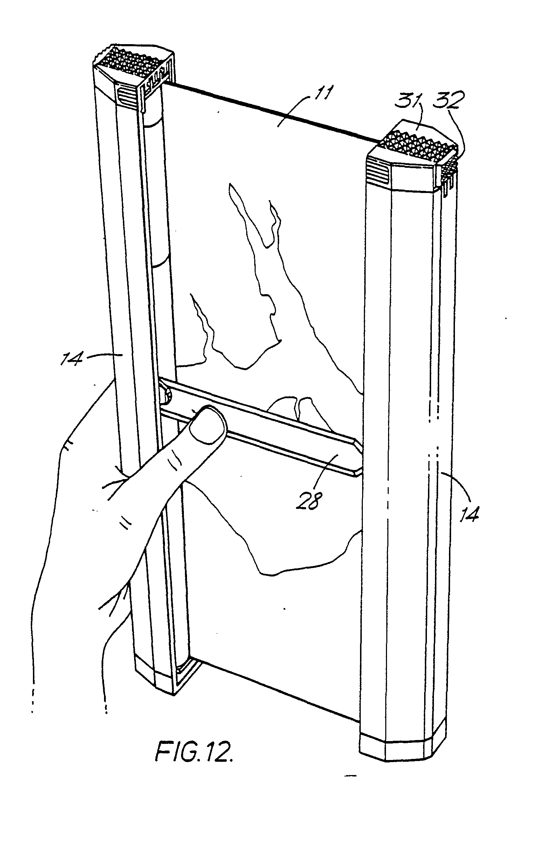

In Fig. 6, the two half-casings 14 are shown in their fully closed condition. To open the casing end and to allow the cartridge to be withdrawn from the casing, slide members 32 are first slid back along the tongue and groove arrangements. The slide members are provided on their undersurface (but not readily visible in the drawings), with cam surfaces similar to the cam surfaces 26 of the embodiment of Figs. 1 to 5, which cam surfaces co-operate with cam followers 27 (see Figs. 8, 9 and 10) of a locking arrangement essentially the same as that for the cartridge of Figs. 1 to 5. As soon as the cam followers 27 are released from the cam surfaces on the underside of the slide members 32, the casing end members 31 are released from the bias of the tension coil spring in the cartridge and can pivot as shown in Fig 8. Since the cartridge is locked against unwinding in this configuration, the two halves of the casing 14 are similarly prevented from opening from each other. The cartridge 10 as a whole may be withdrawn axially from the casing as shown in Fig. 9 and replaced with a different cartridge, where upon the process can be reversed with the casing end members 31 pivoted back into their original positions as shown in Fig 10, and the slide members pushed back into place, at the same time engaging the cam surfaces with the cam followers 27 lifting the indentations in the cartridge support end members 19 from the ratchet dog-teeth (which are all provided in this embodiment in a similar fashion to that illustrated in Figs 1 to 5). The half-casings 14 are then separable from each other as shown in Fig 11 to reveal the map. As in the arrangement of Figs 1 to 5, a self-centred cursor or spacer springs out of the half-casings and enables the two halves of the casing to be held apart as shown in Fig 12 with the selected portion of the map revealed to view. To close the map from the Fig 12 configuration, the cursor or spacer is simply pushed out of the way back into its associated casing and the two casing halves close under the spring bias provided by the tension coil spring means as in the arrangement of Figs. 1 to 5.

Although not shown in the drawings, it will be appreciated that when we refer to a tension coil spring, there may be a single spring or an arrangement of two or more springs connected end to end or in some other fashion so as to provide the desired spring characteristics over the range of opening positions for the map. The selection of one or more springs for this purpose, dependent as it will be on other physical features of the apparatus is a matter of routine selection and testing.

## Claims

1. A replaceable cartridge for use in a map, chart or the like apparatus of the kind in which two half-casings biased to close towards each other to form a complete casing for a map, chart or the like in scroll form are openable against the said bias to reveal the map, chart or the like, the cartridge comprising a pair of supports and a flexible substrate, on which the map, chart or the like is depicted, wound thereon in scroll form; characterised in that the said supports include locking means arranged to be automatically rendered inoperative by the act of mounting the cartridge in the casing, and adapted to prevent the scroll from inadvertently unwinding while outside the casing.

2. A cartridge according to Claim 1, further characterised in that each said support comprises a tubular member to which one end of the flexible substrate is attached and on which the substrate is wound, and an end member biased by means of tension spring means located within said tubular member into locking engagement therewith to prevent relative rotation between the end member and the tubular member, the end member including an integral cam follower adapted for camming engagement with a cam surface formed on an end cap of said casing to lift the said end member out of locking inter-engagement with said tubular member to free said tubular member for rotation relative thereto against the bias of said spring means tending to close the two halves of the casing.

3. A cartridge according to Claim 1, further characterised in that each said support comprises a tubular member to which one end of the flexible substrate is attached and on which the substrate is wound, and an end member biased by means of a tension spring means located within said tubular member into locking engagement therewith to prevent relative rotation between the end member and the tubular member, the end member including an integral cam surface adapted for camming engagement with a cam follower formed on an end cap of said casing to lift the said end member out of locking inter-engagement with said tubular member to free said tubular member for rotation relative thereto against the bias of said spring means tending to close the two halves of the casing.

4. A cartridge according to Claim 2 or Claim 3, further characterised in that the said locking engagement is provided in the form of a dog-tooth ratchet arrangement comprising ratchet dog teeth formed interiorly of the tubular member and corresponding indentations formed in the end member.

5. A map, chart or the like apparatus comprising two half-casings biased to close towards each other to form a complete casing for a map, chart or the like in scroll form, the two half-casings being openable against the said bias to reveal the map, chart or the like; the apparatus being characterised in that each said half-casing has an end cap at one end openable to enable the insertion therewithin or the removal therefrom of a replaceable map, chart or the like cartridge having a pair of supports, and a flexible substrate on which the map, chart or the like is depicted wound on the said supports in scroll form, the said supports including locking means adapted to prevent the scroll from unwinding, and in that the respective said half-casings are provided with disabling means adapted to disable said locking means so that when the said cartridge is mounted within the apparatus, the two half-casings are openable against the said bias to reveal the map, chart or the like on a selected portion of the said flexible substrate.

6. Apparatus according to Claim 5, wherein each said support comprises a tubular member to which one end of the flexible substrate is attached and on which the substrate is wound, and an end member biased by means of a tension spring means located within said tubular member into locking engagement therewith to prevent relative rotation between the end member and the tubular member; and wherein the said apparatus is further characterised in that said disabling means is provided by means of a cam surface formed interiorly on said casing end cap and adapted for camming engagement with a corresponding cam follower integrally provided on said end member whereby to lift the said end member out of locking inter-engagement with said tubular member, thereby to free said tubular member for rotation relative thereto.

7. Apparatus according to Claim 5, wherein each said support comprises a tubular member to which one end of the flexible substrate is attached and on which the substrate is wound, and an end member biased by means of a tension spring means located within said tubular member into locking engagement therewith to prevent relative rotation between the end member and the tubular member; and wherein the said apparatus is further characterised in that said disabling means is provided by means of a cam follower formed interiorly on said casing end cap and adapted for camming engagement with a corresponding cam surface integrally provided on said end member whereby to lift the said end member out of locking inter-engagement with said tubular member, thereby to free said tubular member for rotation relative thereto.

8. Apparatus according to Claim 6 or Claim 7, further characterised in that the said spring means serves both to urge said end member into locking engagement with said tubular member and when said locking means is disabled to provide the said bias against which the two half-casings are adapted to be opened to reveal the map, chart or the like.

9. Apparatus according to any of Claims 6, 7 or 8, further characterised in that the said locking engagement is provided in the form of a dog-tooth ratchet arrangement comprising ratchet dog teeth formed interiorly of the tubular member and corresponding indentations formed in the end member.

10. Apparatus according to any of Claims 5 to 9, further characterised in that end caps at one end of the respective half-casings are slidable in a groove-and-rail arrangement away from each other in a direction transverse to the length of the half-casings so as to open both half-casings at the same end to enable a said cartridge to be withdrawn therefrom.

11. Apparatus according to any of Claims 5 to 9, further characterised in that end caps at one end of the respective half-casings are provided with slide members slidable in respective groove-and-rail arrangements away from each other, thereby releasing said end members to pivot relative to said half-casings so as to open both half-casings at the same end to enable a said cartridge to be withdrawn therefrom.

**Patentansprüche**

1. Austauschbare Kassette zur Anwendung in einer solchen Landkarten-, Karten- oder ähnlichen Apparatur, in der man zwei Gehäusehälften, die vorgespannt sind, um in Richtung aufeinander zu schließen, so daß ein vollständiges, rollenförmiges Gehäuse für eine Landkarte, Karte oder ähnliches gebildet wird, gegen diese Vorspannung öffnen kann, um so die Landkarte, Karte oder ähnliches offenzulegen, wobei die Kassette ein Paar Stützen und einen flexiblen Untergrund umfaßt, worauf die Landkarte, Karte oder ähnliches abgebildet und in Rollenform aufgewickelt ist, dadurch gekennzeichnet, daß jene Stützen eine Verriegelungsvorrichtung umfassen, die so angeordnet ist, daß sie durch den Vorgang des Befestigens der Kassette im Gehäuse automatisch unwirksam wird und verhindert, daß die Rolle, während sie sich außerhalb des Gehäuses befindet, unbeabsichtigt abgewickelt wird.

2. Kassette nach Anspruch 1, weiterhin dadurch gekennzeichnet, daß jede dieser Stützen ein rohrförmiges Element umfaßt, an dem ein Ende des flexiblen Untergrundes befestigt ist und auf das der Untergrund aufgewickelt ist sowie ein durch eine Spannungsfedervorrichtung vorgespanntes Endelement, die sich in dem rohrförmigen Element und in verriegelndem Eingriff mit diesem befindet, um eine relative Rotation zwischen dem End- und rohrförmigen Element zu verhindern, wobei das Endelement einen integralen Nockenstößel zum Eingriff in eine auf einer Endkappe jenes Gehäuses gebildete Nockenfläche umfaßt, um jenes Endelement aus dem Verriegelungsgriff mit jenem rohrförmigen Element zu heben, so daß das rohrförmige Element relativ dazu rotieren kann, und zwar gegen die Vorspannung durch jene Federvorrichtung, die die beiden Gehäusehälften zu schließen versucht.

3. Kassette nach Anspruch 1, weiterhin dadurch gekennzeichnet, daß jede dieser Stützen ein rohrförmiges Element umfaßt, an dem ein Ende des flexiblen Untergrundes befestigt ist und auf das der Untergrund aufgewickelt ist sowie ein durch eine Spannungsfedervorrichtung vorgespanntes Endelement, die sich in dem rohrförmigen Element und in verriegelndem Eingriff mit diesem befindet, um eine relative Rotation zwischen dem End- und rohrförmigen Element zu verhindern, wobei das Endelement eine integrale Nockenfläche zum Eingriff in einen auf einer Endklappe jenes Gehäuses gebildeten Nockenstößel umfaßt, um jenes Endelement aus dem Verriegelungsgriff mit jenem rohrförmigen Element zu heben, so daß das rohrförmige Element relativ dazu rotieren kann, und zwar gegen die Vorspannung durch jene Federvorrichtung, die die beiden Gehäusehälften zu schließen versucht.

4. Kassette nach Anspruch 2 oder Anspruch 3, weiterhin dadurch gekennzeichnet, daß jener verriegelnde Eingriff in Form einer Mitnehmerzahnradvorrichtung vorgesehen ist, die im Innern des rohrförmigen Elements gebildete Radmitnehmerzähne und entsprechende im Endelement gebildete Vertiefungen umfaßt.

5. Landkarten-, Karten- oder ähnliche Apparatur umfassend zwei Gehäusehälften, die vorgespannt sind, um in Richtung aufeinander zu schließen, so daß ein vollständiges, rollenförmiges Gehäuse fur eine Landkarte, Karte oder ähnliches gebildet wird, wobei man die beiden Gehäusehälften gegen diese Vorspannung öffnen kann, um so die Landkarte, Karte oder ähnliches offenzulegen, wobei die Apparatur dadurch gekennzeichnet ist, daß jede dieser Gehäusehälften an einem Ende eine Endkappe aufweist, die man öffnen kann, um das Einfügen oder das Herausnehmen einer austauschbaren Landkarten-, Karten- oder ähnlichen Kassette zu ermöglichen, die ihrerseits ein Paar Stützen und einen flexiblen Untergrund umfaßt, auf den die Landkarte, Karte oder ähnliches auf jenen Stützen in Rollenform aufgewickelt abgebildet ist, wobei jene Stützen eine Verriegelungsvorrichtung umfassen, die verhindert, daß die Rolle abgewickelt wird und daß die jeweiligen Gehäusehälften mit einer Sperrvorrichtung vorgesehen sind, die jene Verriegelungsvorrichtung sperrt, so daß man bei in der Apparatur befestigten Kassette die beiden Gehäusehälften gegen jene Vorspannung öffnen kann, um die Landkarte, Karte oder ähnliches auf einem ausgewählten Teil jenes flexiblen Untergrunds offenzulegen.

6. Apparatur nach Anspruch 5, worin jede dieser Stätzen ein rohrförmiges Element umfaßt, an dem ein Ende des flexiblen Untergrundes befestigt ist und auf das der Untergrund aufgewickelt ist, sowie ein durch eine Spannungsfedervorrichtung vorgespanntes Endelement, die sich in dem rohrförmigen Element und in verriegelndem Eingriff mit diesem befindet, um eine relative Rotation zwischen dem End- und rohrförmigen Element zu verhindern und worin jene Apparatur weiterhin dadurch gekennzeichnet ist, daß jene Sperrvorrichtung durch eine Nockenfläche vorgesehen ist, die im Innern jener Gehäuseendkappe gebildet ist und mit einem entsprechenden, integral auf jenem Endelement vorgesehenen Nockenstößel in Eingtiff steht, um dadurch jenes Endelement aus dem Verriegelungsgriff mit jenem rohrförmigen Element zu haben, so daß das rohrförmige Element relativ dazu rotieren kann.

7. Apparatur nach Anspruch 5, worin jede dieser Stützen ein rohrförmiges Element umfaßt, an dem ein Ende des flexiblen Untergrundes befestigt ist und auf das der Untergrund aufgewickelt ist, sowie ein durch eine Spannungsfedervorrichtung vorgespanntes Endelement, die sich in dem rohrförmigen Element und in verriegelndem Eingriff mit diesem befindet, um eine relative Rotation zwischen dem End- und rohrförmigen Element zu verhindern und worin jene Apparatur weiterhin dadurch gekennzeichnet ist, daß jene Sperrvorrichtung durch einen Nockenstößel vorgesehen ist, der im Innern jener Gehäuseendkappe gebildet ist und mit einer entsprechenden, integral auf jenem Endelement vorgesehenen Nockenfläche in Eingriff steht, um dadurch jenes Endelement aus dem Verriegelungsgriff mit jenem rohrförmigen Element zu heben, so daß das rohrförmige Element relativ dazu rotieren kann.

8. Apparatur nach Anspruch 6 oder 7, weiterhin dadurch gekennzeichnet, daß jene Federvorrichtung dazu dient, um sowohl jenes Endelement in verriegelnden Eingriff mit jenem rohrförmigen Element zu drängen, als auch um, nach Sperren jener Verriegelungsvorrichtung, jene Vorspannung vorzusehen, gegen die man die beiden Gehäusehälften zur Offenlegung der Landkarte, Karte oder ähnlichem öffnen kann.

9. Apparatur nach einem der Ansprüche 6, 7 oder 8, weiterhin dadurch gekennzeichnet, daß jener vorriegelnde Eingriff in Form einer Mitnehmerzahnradvorrichtung vorgesehen ist, die im Innern des rohrförmigen Elements gebildete Radmitnehmerzähne und entsprechende im Endelement gebildete Vertiefungen umfaßt.

10. Apparatur nach einem der Ansprüche 5 bis 9, weiterhin dadurch gekennzeichnet, daß die Endkappen an einem Ende der jeweiligen Gehäusehälften in einer Anordnung aus Nut und Schiene in Querrichtung zur Länge der Gehäusehälften auseinandergleiten können, um so beide Gehäusehälften an demselben Ende zu öffnen, so daß jene Kassette herausgezogen werden kann.

11. Apparatur nach einem der Ansprüche 5 bis 9, weiterhin dadurch gekennzeichnet, daß Endkappen an einem Ende der jeweiligen Gehäusehälften mit Gleitelementen vorgesehen sind, die in jeweiligen Anordnungen aus Nut und Schiene auseinandergleiten können, wodurch jene Endelemente gelöst werden, so daß sie bezuglich jener Gehäusehälftenverschwenken, um so beide Gehäusehälften an demselben Ende zu öffen, so daß jene Kassette herausgezogen werden kann.

**Revendications**

1. Une cartouche interchangeable, utilisable dans un dispositif pour carte géographique, marine, ou analogue, du type dans laquelle deux moitiés de boîtier poussées l'une vers l'autre pour se fermer pour former un boîtier complet pour une carte géographique, marine, ou analogue, sous la forme d'un rouleau, sont susceptibles d'être ouvertes à l'encontre de ladite force de poussée pour découvrir la carte géographique, marine, ou analogue, la cartouche comportant une paire de supports et un fond souple, sur lequel la carte géographique, marine, ou analogue est représentée, enroulée sur celui-ci sous la forme d'un rouleau; caractérisée en ce que lesdits supports comportent des moyens de verrouillage disposés pour devenir automatiquement inopérants sous l'effet du montage de la cartouche dans le boîtier, et destinés à empêcher le rouleau de se dérouler par mégarde en étant à l'extérieur du boîtier.

2. Une cartouche selon la revendication 1, caractérisée en outre en ce que chacun desdits supports comporte un élément tubulaire auquel est fixée l'une des extrémités du fond souple et sur lequel le fond est enroulé, et un élément d'extrémité poussé à venir se verrouiller avec celui-ci, par l'intermédiaire d'un ressort de tension monté dans ledit élément tubulaire pour empêcher la rotation relative entre l'élément d'extrémité et l'élément tubulaire, l'élément d'extrémité et l'élément tubulaire, l'élément d'extrémité comportant un suiveur de came solidaire destiné à venir s'engager dans une surface de came formée sur un obturateur d'extrémité dudit boîtier pour soulever ledit élément d'extrémité et le dégager de sa prise de verrouillage avec ledit élément tubulaire pour permettre la rotation dudit élément tubulaire par rapport à celui-ci à l'encontre de la force de poussée dudit ressort tendant à fermer les deux moitiés du boîtier.

3. Une cartouche selon la revendication 1, caractérisée en outre en ce que chacun desdits supports comporte un élément tubulaire auquel est fixée l'une des extrémités du fond souple et sur lequel le fond est enroulé, et un élément d'extrémité poussé à venir se verrouiller avec celui-ci, par l'intermédiaire d'un ressort de tension monté dans ledit élément tubulaire pour empêcher la rotation relative entre l'élément d'extrémité et l'élément tubulaire, l'élément d'extrémité comportant une surface de came solidaire destinée à venir en prise avec un suiveur de came formé sur un obturateur d'extrémité dudit boîtier pour soulever ledit élément d'extrémité et le dégager de sa prise de verrouillage avec ledit élément tubulaire pour permettre audit élément tubulaire de tourner par rapport à celui-ci à l'encontre de la force de poussée dudit ressort tendant à fermer les deux moitiés du boîtier.

4. Une cartouche selon la revendication 2 ou la revendication 3, caractérisée en outre en ce que ladite prise de verrouillage se présente sous la forme d'un mécanisme de cliquet à griffes comportant des griffes d'arrêt formées à l'intérieur de l'élément tubulaire et des dentelures correspondantes formées dans l'élément d'extrémité.

5. Un dispositif de carte géographique, marine, ou analogue, comprenant deux moitiés de boîtier poussées l'une vers l'autre pour se fermer pour former un boîtier complet pour une carte géographique, marine, ou analogue, sous la forme d'un rouleau, les deux moitiés de boîtier pouvant être ouvertes l'encontre de ladite force de poussée pour découvrir la carte géographique, marine, ou analogue; le dispositif étant caractérisé en ce que chacune desdites moitiés de boîtier présente un obturateur d'extrémité, à l'une des extrémités, pouvant être ouvert pour permettre l'insertion à l'intérieur ou le retrait de celui-ci d'une cartouche interchangeable de carte géographique, marine, ou analogue, ayant une paire de supports et un fond souple sur lequel la carte géographique, marine, ou analogue, est représentée enroulée sur lesdits supports sous la forme d'un rouleau, lesdits supports comportant des moyens de verrouillage destinés à empêcher le rouleau de se dérouler, et en ce que lesdites moités de boîtier respectives sont munies de moyens de mise hors service destinés à mettre hors service lesdits moyens de verrouillage de telle sorte que lorsque ladite cartouche est montée dans le dispositif, les deux moitiés de boîtier puissent être ouvertes à l'encontre de ladite force de poussée pour découvrir la carte géographique, marine, ou analogue, sur une portion choisie dudit fond souple.

6. Dispositif selon la revendication 5, dans lequel chacun desdits supports comporte un élément tubulaire auquel est fixée l'une des extrémités du fond souple et sur lequel le fond est enroulé et un élément d'extrémité poussé par l'intermédiaire d'un ressort de tension monté dans ledit élément tubulaire, en prise de verrouillage avec celui-ci pour empêcher la rotation relative entre l'élément d'extrémité et l'élément tubulaire; et dans lequel ledit dispositif est en outre caractérisé en ce que lesdits moyens de mise hors service sont constitués par l'intermédiaire d'une surface de came formée à l'intérieur dudit obturateur d'extrémité du boîtier et destiné à venir en brise avec un suiveur de came correspondant solidaire dudit élément d'extrémité de manière à soulever ledit élément d'extrémité et à l'amener hors de sa prise de verrouillage avec ledit élément tubulaire, afin de permettre audit élément tubulaire de tourner par rapport à celui-ci.

7. Dispositif selon la revendication 5, dans lequel chacun desdits supports comporte un élément tubulaire auquel est fixée l'une des extrémités du fond souple et sur lequel le fond est enroulé, et un élément d'extrémité poussé par l'intermédiaire d'un ressort de tension monté dans ledit élément tubulaire, en prise de verrouillage avec celui-ci pour empêcher la rotation relative entre l'élément d'extrémité et l'élément tubulaire; et dans lequel ledit dispositif est en outre caractérisé en ce que lesdits moyens de mise hors service sont constitués par l'intermédiaire d'un suiveur de came formé à l'intérieur dudit obturateur d'extrémité du boîtier et destiné à venir en brise avec une surface de came correspondante solidaire dudit élément d'extrémité de manière à soulever ledit élément d'extrémité et l'amener hors de sa prise de verrouillage avec ledit élément tubulaire afin de permettre audit élément tubulaire de tourner par rapport à celui-ci.

8. Dispositif selon la revendication 6 ou la revendication 7, caractérisé en outre en ce que ledit ressort sert à la fois à pousser ledit élément d'extrémité à venir en prise de verrouillage avec ledit élément tubulaire et, lorsque lesdits, moyens de verrouillage sont mis hors service à fournir ladite force contre laquelle les deux moitiés de boîtier sont destinés à être ouverts pour découvrir la carte géographique, marine, ou analogue.

9. Dispositif selon l'une quelconque des revendications 6, 7 ou 8, caractérisé en outre en ce que ladite prise de verrouillage est réalisée sous la forme d'un mécanisme de cliquet à griffes comportant des griffes d'arrêt formées à l'intérieur de l'élément tubulaire et des dentelures correspondantes formées dans l'élément d'extrémité.

10. Dispositif selon l'une quelconque des revendications 5 à 9, caractérisé en outre en ce que les obturateurs d'extrémité à l'une des extrémités des moitiés de boîtier respectives peuvent coulisser dans une structure à rainure -rail en s'éloignant l'un de l'autre dans une direction transversale à la longueur des moitiés de boîtier de manière à ouvrir les deux moitiés de boîtier à la même extrémité pour permettre à ladite cartouche d'être retirée de celle -ci.

11. Dispositif selon l'une quelconque des revendications 5 à 9, caractérisé en outre en ce que les obturateurs d'extrémité à l'une des extrémités des moitiés de boîtier respectives sont munis d'éléments coulissants susceptibles de coulisser dans des structures respectives à rainure -rail en s'éloignant l'un de l'autre de manière à dégager ainsi lesdits éléments d'extrémité pour leur permettre de pivoter par rapport auxdites moitiés de boîtier afin d'ouvrir les deux moitiés de boîtier à la même extrémité pour permettre à ladite cartouche d'être retirée de celle -ci.

FIG.1.

*25*

*19*

*12*

*15*

*16*

*26*

*17*

*18*

*14*

*30*

*28*

*29*

*13*

*11*

*27*

*15*

*15*

*14*

FIG.2.

*14*

FIG.6.

FIG.3.

FIG.4.

FIG.5.

FIG.7.

FIG.8.

FIG.10.

33

32

31

14

14

19

10

27

31

32

14

FIG.9.

FIG.11.

FIG.12.